# EUROPEAN PATENT SPECIFICATION

(11) **EP 2 882 299 B1**
(45) Date of publication and mention of the grant of the patent: **02.10.2019**
(21) Application number: 13756206.2
(22) Date of filing: 01.07.2013
(51) Int. Cl.: A23G 1/50, A44C 9/00

(54) **IMPROVED CARRIER DEVICE FOR A CHOCOLATE FIGURE AND METHOD FOR THE MANUFACTURE THEREOF**
VERBESSERTE TRÄGERVORRICHTUNG FÜR EINE SCHOKOLADENFIGUR UND VERFAHREN ZU IHRER HERSTELLUNG
DISPOSITIF DE SUPPORT PERFECTIONNÉ POUR UNE FIGURINE EN CHOCOLAT ET PROCÉDÉ PERMETTANT LA FABRICATION DE CE DERNIER

(30) Priority: 10.08.2012 BE 201200542
(43) Date of publication of application: 17.06.2015
(73) Proprietor: C&B Logistics BVBA, 9160 Lokeren (BE)
(72) Inventor: Patyn, Luk, B-9160 Lokeren (BE)
(74) Representative: Brantsandpatents bvba
(86) International application number: PCT/IB2013/055398
(87) International publication number: WO 2014/024058

(56) References cited:
- WO-A1-02/094030
- WO-A2-2005/036049
- FR-A- 1 385 584
- US-A- 5 115 648
- US-A1- 2002 150 655
- US-B1- 6 763 681

## Description

The present invention relates to a carrier device for a chocolate figure. In addition, the present invention relates to an improved method for the manufacture of a chocolate figure provided on the carrier device.

### BACKGROUND

Chocolate is known in many shapes, such as chocolate lollipops. However, chocolate lollipops have the disadvantage that chocolate is spilled during consumption. FR 1 385 584 discloses such a traditional chocolate lollipop and a method for the production thereof.

In prior art several carrier devices are known for carrying traditional confectionery. For instance U.S. 6,763,681 and U.S. 5,115,648 describe such carrier devices for traditional confectionery. However, these are not suitable for carrying chocolate figures. Moreover, the production methods for creating these confectionery-rings cannot be extrapolated to applications with chocolate. Therefore , other more specific techniques should be developed.

The present invention aims to provide aesthetic, ergonomic and safe carrier devices for chocolate figures. In addition, these carrier devices according to the invention are suitable to be used in traditional chocolate moulds that are being used in the chocolate industry.

### SUMMARY OF THE INVENTION

The invention relates in particular to a carrier device as defined in claim 1. Preferred embodiments are comprised in claims 2-12.

In a second aspect, the invention relates to a method as defined in claim 13.

### DESCRIPTION OF THE FIGURES

The accompanying Figures 1-11 show preferred embodiments of the invention.
In Figure 1 a perspective view is shown wherein the carrier device according to the invention is shown around the ring finger of a hand.
In Figure 2 a partial perspective view is shown wherein the internal securing element in the chocolate figure is shown in dotted line. Figure 2A shows an embodiment not within the scope of the invention.
In Figures 3 and 4 various views are shown of an embodiment of the carrier device.
Figures 5A-5C also show embodiments of the carrier device according to the present invention.
In Figure 6 a top view is shown of an embodiment of a chocolate mould according to the present invention.
In Figure 7 the cross-sectional view is shown of a closed mould according to line VI-VI of Figure 6, wherein in Figure 8 the carrier device is provided.
In Figure 9 the top view from Figure 8 is shown.
In Figure 10 an embodiment of the method is schematically illustrated in the consecutive steps a-f.
In Figure 11 another embodiment of the method according to the present invention is illustrated.
Figures 12-15 illustrate an embodiment of a device according to the invention.
Figures 16a-c and 17a-c provide a detailed view of an embodiment of a detachable hinge according to the present invention, and the detachable coupling of the frame halves of the device.
Figures 18 a-g show a method for the production of hollow chocolate articles in accordance with a preferred embodiment of the invention.

### DETAILED DESCRIPTION

The present invention relates a carrier device provided with a chocolate figure.

"A", "the" and "it" refer in this document to both the singular and the plural, unless the context clearly implies otherwise. For example, "a figure" means one or more than one figures.

The terms "comprise", "comprising", "consist of", "consisting of", "provide with", "contain", "containing", "amount to", "amounting to", "include", "including", are synonyms and are inclusive or open terms that indicate the presence of what follows, and which do not exclude or prevent the presence of other components, features, elements, parts, steps as are known from or described in the prior art.

Citing numerical intervals by end points includes all integer numbers, fractions and/or real numbers between the end points, including these end points.

When in this document "about" or "around" are used with a measurable quantity, a parameter, a time period or a moment, and the like, then variations of +/-20% or less are meant, preferably +/-10% or less, more preferably +/-5% or less, still more preferably +/-1% or less, and even more preferably +/-0.1% or less than the cited value, provided that such variations are applicable in the described invention. It should, however, be understood that the value itself of the quantity wherein the term "about" or "around" is used, is disclosed specifically.

Unless defined otherwise, all terms used in the description of the invention, including technical and scientific terms, have the meaning as commonly understood by those skilled in the technical field of the invention.

In the following, the invention is described on the basis of non-limiting examples which illustrate the invention, and which are not intended to or should be not be interpreted to limit the scope of the invention.

The carrier device will preferably comprise an open or partially closed ring, wherein the ring comprises a ring diameter that is suitable for partially surrounding a finger of a hand. In addition, the carrier device will be provided with a fixing element provided on the ring, which fixing element is suitable for fixing a chocolate figure, wherein the fixing element extends away from the ring and is at least partly surrounded in the chocolate figure. In a preferred embodiment, the ratio between the length of the chocolate figure and the length of the fixing element will be between 1 and 8, more preferably between 1.5 and 4, even more preferably between 1.5 and 3, most preferably between 1.5 and 2. In a preferred embodiment, the ratio is approximately 1.66.

The inventors found that within this predetermined ratio a good anchoring of the chocolate figure to the ring will be effected, without having on the one hand the risk of the chocolate figure breaking off (due to lack of support), or that on the other hand the fixing element will be too high or extend too far into the chocolate figure. This latter situation can lead to a less pleasant consumption experience, as the consumer is obliged to bite/nibble around the stick. The predetermined ratio ensures that the above-mentioned problems will not take place.

In a another preferred embodiment, the fixing element will at its free end be provided with a widening, wherein the widening is preferably at least partially or completely comprised in the chocolate figure. It has been found that this widening also provides for an improved anchoring of the chocolate to the carrier structure.

In one embodiment, the average width D1 will be smaller over the entire length of the fixing element than the average thickness d over the entire length of the chocolate figure. This ensures that, at an optimum production process, the fixing element in the chocolate figure is not visible to the user, which increases the aesthetics of the whole. In particular, this average width D1 will amount to a maximum of 0.9 times the average thickness d of the chocolate figure.

In a further preferred embodiment, the fixing element will have a length that is smaller than the opening of the ring. In particular, the fixing element may include an element of surprise, such as a little figure, or any other sweetmeat like a chewing gum.

The carrier device will comprise a carrier platform, which extends substantially perpendicular to the longitudinal direction of the fixing element that is provided between ring and fixing element. In the present embodiment, the fixing element will thus rest on the carrier platform.

Preferably, the carrier platform will have a length that is greater than the opening of the ring. In particular, the length of the carrier platform amounts to 1.1 to 2.5 times the opening of the ring. The carrier platform ensures that the hand of the consumer does not come into contact with the chocolate figure, thus preventing the hands to be soiled during the eating or carrying (for example, due to melting of the chocolate through contact with the body heat). The length is so designed that it will span the entire upper side of the finger on which the ring is worn, as well as partially the upper side of the two adjacent fingers.

For the sake of the abovementioned argument, in a further embodiment also the width (D2) of the carrier platform will comprise 0.5 to 5 times the width of the chocolate figure, more preferably 0.5 to 1.5 times, most preferably 1 to 1.5 times.

According to the invention, the chocolate figure will rest on the carrier platform. This provides additional support for the chocolate figure.

Preferably, the carrier platform will be rounded off and preferably be elliptical, round, rectangular or polygonal. In a preferred embodiment, the carrier platform is rectangular with rounded corners.

The ring of the carrier device will preferably be at least partially open. This allows for a certain clearance of the diameter of the ring, so that it will in principle be suitable for the most common finger sizes.

In a further embodiment, the ring will at the base be provided with one or more foot supports. In a preferred embodiment, the ring comprises two horizontal foot supports, wherein each foot support is attached to one of the two open ends of the ring. These foot supports ensure on the one hand that the ring remains well positioned on the finger, and on the other hand they also ensure that the ring can be positioned on a foot support. The foot supports also provide an additional weight that has appeared to be important during the production of the carrier device with chocolate figure.

Preferably, the fixing element will extend substantially perpendicularly to the carrier platform or the ring.

Preferably, the ring will be made of an at least partially elastic material. The carrier device can be obtained, among other things, by means of an injection moulding process.

The chocolate figure will preferably be a filled chocolate figure (in other words, not hollow) and may be a fantasy figure (for instance a monkey, a rabbit, a clown, etc.). Preferably, the chocolate figure has a weight of between 5 and 25 grams, more preferably between 10 and 20 grams, even more preferably between 12.5 and 18 grams, most preferably 15 grams.

In a second aspect, the present invention also provides a method for manufacturing a carrier device with chocolate figure according to the above embodiments. Preferably, here the carrier devices will be arranged in a chocolate mould or a chocolate mould half, so as next to be provided with a melted chocolate product in one or more layers. In another possible embodiment, the moulds or mould halves will initially be provided with one or more coloured layers of chocolate as a decoration, after which the carrier devices will be supplied. Subsequently the predominant chocolate layer will be applied.

The carrier devices are delivered in the correct orientation by means of an orientation device. By 'orientation device' is meant a device, which ensures that all the carrier devices are delivered in the desired way, that is to say in the desired orientation. Such orientation devices are known in the prior art and may include, among other things, vibrating basins, vibration hoppers or vibrating troughs. Due to the specific configuration and the weight of the carrier device, and more particularly the presence of the foot supports in combination with the orientation device, the carrier device will each time be presented to the moulds in the correct orientation. For this purpose the moulds are provided with one or more specific recesses for receiving the carrier device. Preferably, the carrier structures have a weight between 1 and 4 grams, more preferably between 1.5 and 3 grams, most preferably about 2 grams. It has been found that these weight ranges are ideal for the positioning of the rings in the mould, as well as for the efficient retention of the chocolate figure on the carrier structure. At the same time this weight appears to be ideal for the carrying comfort of the consumer. In particular, the carrier devices with chocolate figures according to the present invention are produced completely automatically and in an industrial way, by means of an automated production line.

There is also described a device for making chocolate figures, for instance hollow or filled chocolate figures. In one aspect, there is described a device for the manufacturing of chocolate figures wherein the objects are made up of two corresponding halves, a first half for the front side and a second half for the rear side of the object, which device comprises of a frame comprising two corresponding frame halves wherein the frame halves comprise at least one recess for receiving a mould, characterized in that the two similar frame halves are detachably articulated.

The term "corresponding" should be interpreted as including an identical peripheral edge, wherein the peripheral edges fit perfectly if they are laid upon each other. In this configuration, there should be no freedom of positioning. In the context of the present invention, both the two frame halves and the mould halves and the two figure halves should be perfectly matched in order to thus create a high-quality three-dimensional object.

The term "detachedly or detachably" articulated should be regarded as an object, in the specific context of the present invention a hinge, wherein without the use of an extra tool certain separate parts of the hinge can be attached to one another creating a complete hinge, which hinge can be taken apart into some individual parts again by a simple movement, by for instance an upward or downward pressure or snap movement or by the exertion of a force or pressure on the hinge or on the device to which the hinge is mounted. Preferably, the hinge can be disassembled into a pivot axis and hinge lugs. Disassembly of these components can be accomplished by exerting a force, which has the effect that the hinge lugs separate from the hinge axis. Assembly of the hinge also takes place by means of the application of a force, with the purpose that the hinge lugs clasp the axis again.

In other words, the detached or detachable hinge can be disassembled into a pivot axis and hinge lugs, by exerting a force.

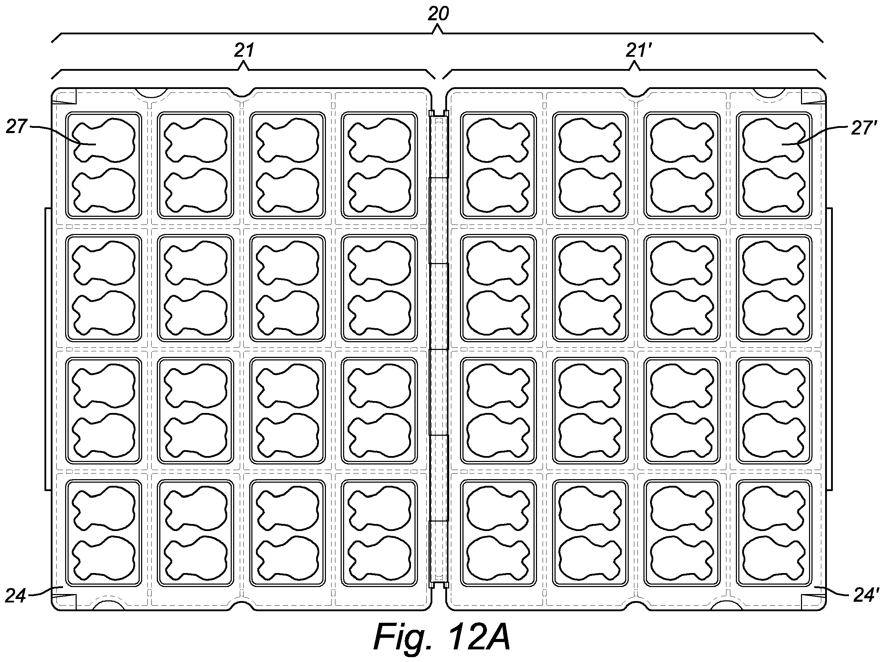

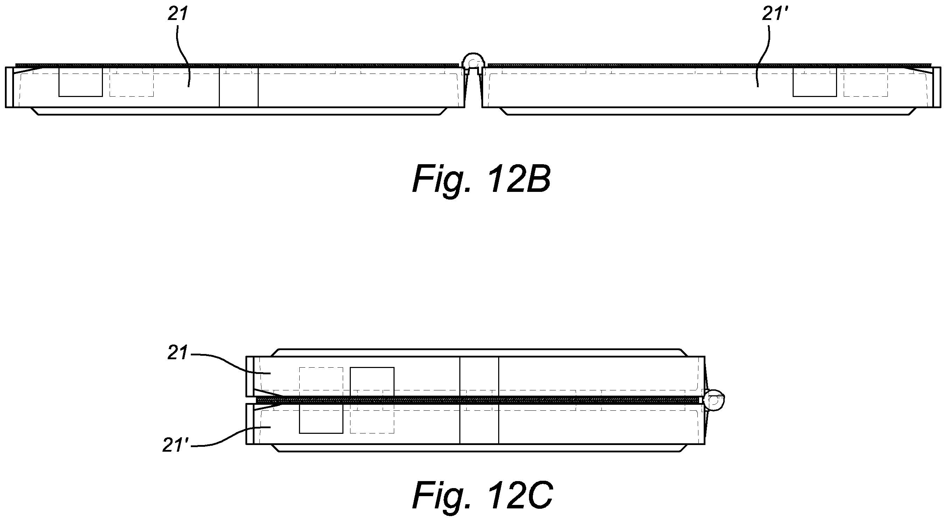

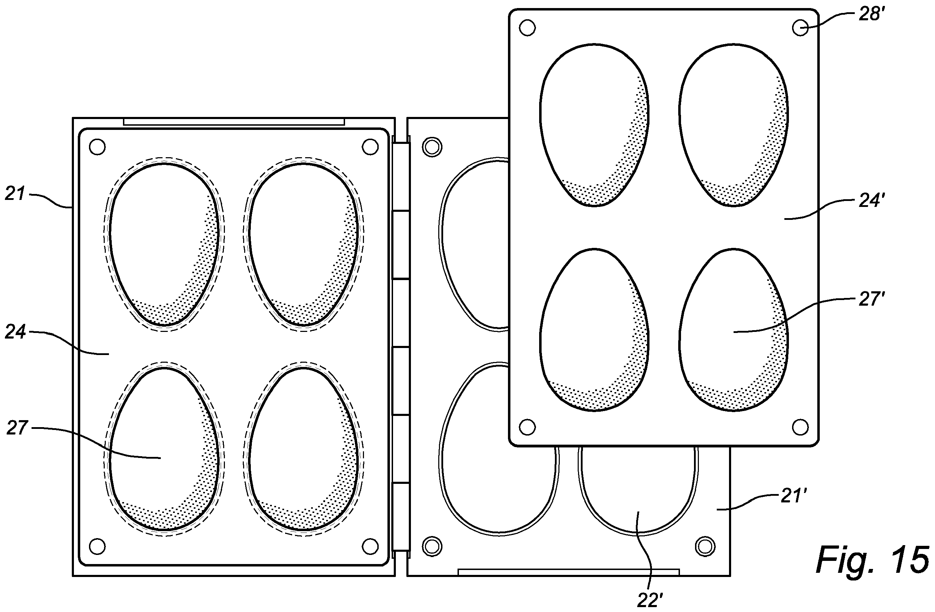

Figures 12-18 show preferred embodiments of the device. Although the device is suitable for the production of all objects made of chocolate or confectionery, it is preferably suitable for the industrial production of hollow articles composed of two corresponding halves, one for the front side, one for the rear side, which halves are different from each other, wherein the object is preferably a chocolate object. Differences can, amongst others, occur in particular in the shape or the relief of the front side and rear side, as well as in the used colour pattern of the figures. The half for the front of the hollow article can for instance be provided with several sub-layers of chocolate or confectionery, which are different from the generally dominant colour or chocolate type of the hollow object. Preferentially, the half for the front side will be more complex in appearance, in used types of chocolate and decorations than the half for the rear side of the hollow chocolate object.

There is thus provided a device that comprises a frame consisting of two similar frame halves, characterized in that the two frame halves are detachedly articulated or detachably coupled. Thus the device allows, if necessary, for the frame halves to run separately through a production line and being assembled at a particular point in time during production. Not only is this more efficient in terms of the time frame of the production, since the two halves can be decorated simultaneously if necessary, but this also allows for the incorporation of bends of 90° or more into the production line. When using a complete frame consisting of two coupled frame halves, such bends give problems that are mainly due to the size and rigidity of the framework, wherein there is a substantial risk that the production line is blocked because these frames jam. By coupling the framework halves in a detachedly articulated manner, the frame halves can be transported separately through the production line and can be assembled at the moment that it is desirable during the production.

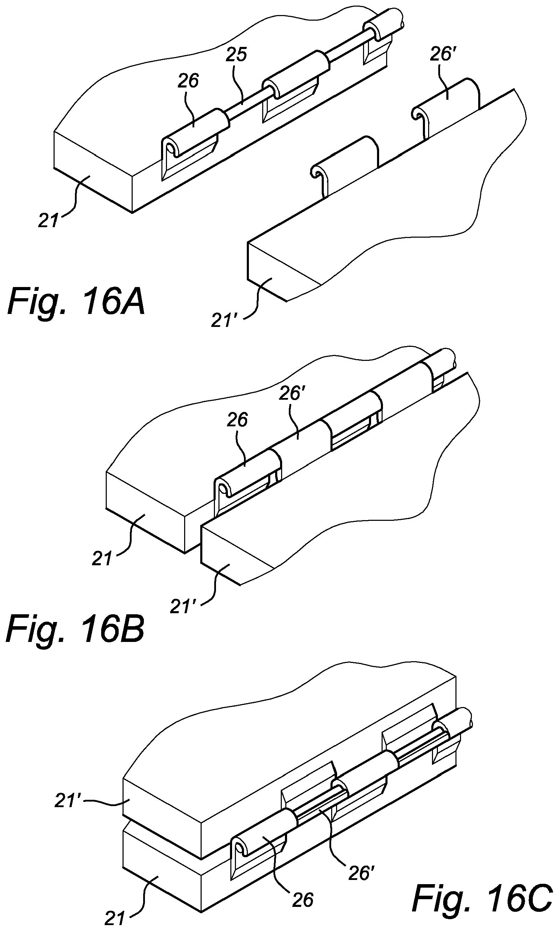

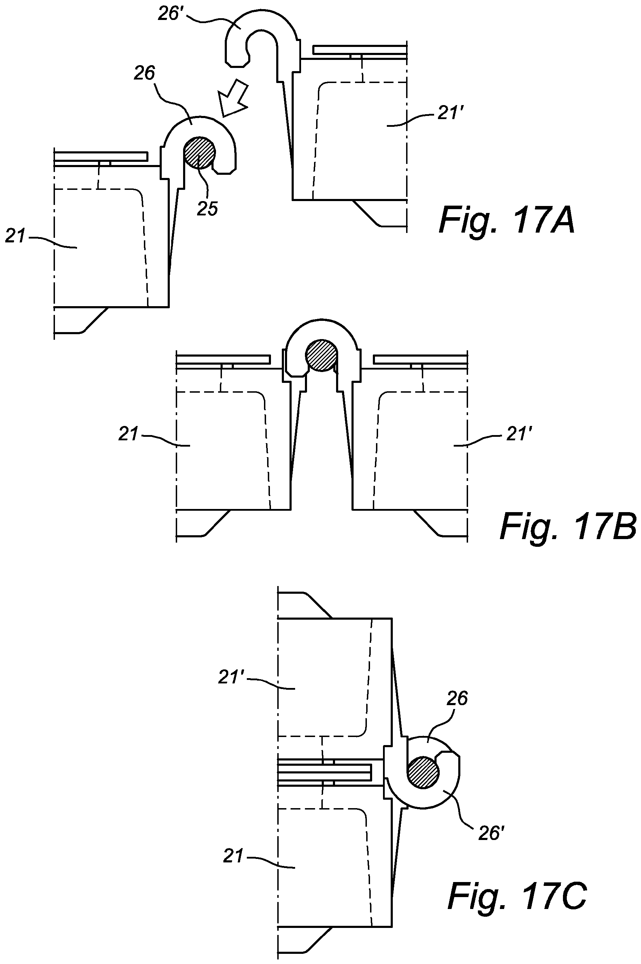

To this end, the first frame half of the device in a preferred embodiment is provided with a detachable hinge. With reference to Figures 16 and 17 a detachable hinge is shown, according to a preferred embodiment of the present invention. Here, the first frame half (21) is provided with a pivot axis (25). Preferentially this pivot axis extends substantially over the entire length or width of the first frame half. In another embodiment, the pivot axis can be limited to a portion of the length or width of the frame half. In yet another embodiment, the pivot axis can be interrupted and consist of two or more axes, across the length or width of the frame half.

In a preferred embodiment, the first frame half (21) comprises hinge lugs (26). In a more preferred embodiment, these hinge lugs (26) of the first frame half (21) are suitable to fixedly or non-detachably clasp the pivot axis (25). The fixed clasp of the pivot axis can for instance be obtained by gluing together the pivot axis (25) and the hinge lugs (26).

In a further preferred embodiment, the second frame half (21') comprises hinge lugs (26') that are suitable to detachably clasp the pivot axis (25). The term "detachably clasp" can be defined as being an element, in this case the hinge lugs, which is able to temporary clasp or attach another element, in this case an axis, and wherein both elements can be disengaged from each other in a simple manner, preferably by applying a force without the need of external equipment or tools.

In a preferred embodiment, the hinge lugs (26, 26') are at least partially curved, and preferably they will adopt an open cylindrical shape. Such an open cylindrical shape should be regarded as a cylindrical shape, wherein a segment has been removed from the cylindrical shape. The size and shape of the segment that is removed from the cylindrical shape of the hinge lugs (26, 26') is co-determined by the shape and thickness of the pivot axis (25) that is to be clasped by the hinge lugs (26, 26'). In a further embodiment, the hinge lugs (26, 26') can be U-shaped or hook-shaped.

In a preferred embodiment, the total length L of the hinge lugs (26, 26') of one frame half represents maximally half of the length I of the side where the hinge lugs (26, 26') are provided. The total length L of the hinge lugs should be regarded as the sum of the individual lengths of L1, L2, ..., Ln, of the number of hinge lugs n per frame half.

The frame halves can thus be detachedly pivotally coupled with the aid of the pivot axis (25) and the hinge lugs (21). Coupling and decoupling can be done easily and quickly, without the need of additional tools. Coupling of the frame halves can be achieved by a downward movement, wherein during the coupling the hinge lugs (26') of the second frame half (21') snap into place as it were around the exposed parts of the pivot axis (25) of the first frame half, wherein the snapping is done by exerting a slight pressure on the second frame half (21') and associated hinge lugs (26'). In contrast, the decoupling takes place in the reverse direction, wherein a simple upward movement will provide for decoupling or unclipping the hinge lugs from the pivot axis (25). Decoupling is also done by carrying out a slight pressure on the frame halves (21, 21'). By making the frame halves of the frame detachedly articulated by means of the detachable hinge according to the present invention, both frame halves can be simply coupled to one another when desired during the manufacturing process, and both frame halves can be positioned perfectly upon each other. This perfect positioning will ensure among other things that no lateral shifts of the frame halves relative to each other can take place, for example during the rotational moulding process. These shifts are absolutely undesirable, since they cause discrepancies and distortions of the final target object. In addition, the hinge according to the present invention will attach the two frame halves so strongly to each other that these do not disengage during further proceedings of the manufacture. The hinges will also keep the frame halves adequately closed, for example during rotational moulding, wherein it is prevented that chocolate will be leaking from the device.

In a further embodiment, the first frame half (21), the second frame half (21') or both of the frame halves (21, 21') around the circumference are provided with a polymer layer, preferably an elastic or compressible polymer layer, such as for example silicone. This polymer layer provides an additional sealing of the frame halves and prevents shifting. Preferably, the polymer layer is applied to the circumference of the frame half, at the height of the side that will receive the mould.

The frame (20) with the frame halves (21, 21') of the device may be manufactured from any materials available to the skilled person. Thus, it is possible to make use of metal, wood or organic synthetic materials for the manufacture of the frame (20). In a preferred embodiment, the frame halves will consist of a plastic material, and will preferably be obtained by extrusion or injection moulding. Suitable synthetic materials can for example be selected from thermosetting (co)polymers such as epoxies, unsaturated polyester resins and so on. Suitable thermoplastic (co)polymers are for instance polyamides (PA), polyolefins, for example polypropylene (PP), polyethylene (PE), polytetrafluoroethylene (PTFE), polyphenyleenether (PPE or PPO) and so on, amorphous and/or crystalline polyesters such as polyalkylene terephthalates, for example polyethylene terephthalate (PETP or PET), polybutene terephthalate (PBT) etc., or polyimides (PI) such as polyetherimide (PEI), polyamideimide (PAI) or polymethylmethacrylate (PMMA), polyethermethacrylaat (PEMA), and polycarbonates. Suitable transparent plastics are selected from the amorphous synthetic materials of the above-mentioned list. In a preferred embodiment, the frame halves (21, 21') are identical to each other when being produced. This has the advantage of cheaper production costs. Afterwards, one of the frame halves will be provided with a fixed pivot axis.

The device comprises a frame (20) wherein the frame (20) comprises at least one recess (22), suitable to receive a mould (23). In a preferred embodiment, the mould (23) will comprise two corresponding mould halves (24, 24') consisting of one sheet, which mould halves comprise at least one figure half (27, 27'). Preferentially the mould halves consist of a single sheet, which sheet is preferably made from a polymer, like there are a polyalkyleentereftalmaat polymer, for example polyethylene terephthalate (PETP or PET), and/or polybutene terephthalate (PBT). Still more preferably a polycarbonate plastic material is used for this purpose, such as Makrolon®. The mould halves with figure halves are preferably created using a thermoforming process, or by way of an injection moulding process.

Preferentially, the frame (20) will have a substantially rectangular shape. The mould halves (24, 24') comprise figure halves (27, 27'), wherein the figure halves are evenly dispersed over the surface of the mould halves (24, 24'). The figure halves of each mould half (24) are similar to each other.

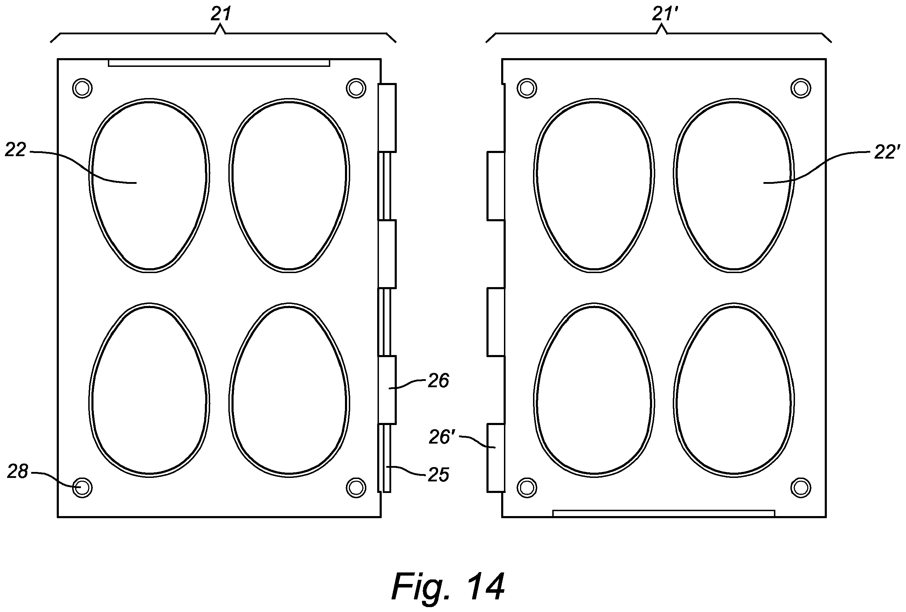

In one embodiment, the mould halves (24, 24') are provided with positioning means (28, 28') like there may be studs, recesses and other relief forms. These positioning means (28, 28') can contribute to holding the moulds together during the rotational moulding, but they are optional. In another embodiment, these positioning means (28, 28') can be used for attaching the mould halves (24, 24') within the frame halves (21). For this purpose, the corresponding positioning elements (28, 28') that are present on the frame halves (21) will be able to comprise or enclose the corresponding positioning elements (28') of the mould halves (24'), like a push-button principle or a key-lock principle. In another embodiment, the positioning means (28, 28') of respectively the mould halves (24) and the frame halves (21) operate via a magnetic principle. With reference to Figure 14, a possible embodiment of the positioning means (28, 28') is illustrated that can be present on the frame halves (21) and the mould halves (24).

Preferably, the mould halves (24) comprise at least one figure half, wherein the figure halves will provide for the shaping of the object that is to be created. In a further preferred embodiment, the figure half (27) of the first mould half (24) will determine the intended shape and the relief of the first half of the object, which determines the front side of the object. Corresponding to this, the second figure half (27') of the second mould half (24') will determine the intended shape and the relief of the second half of the object, being the rear side. Each figure half can be adjusted according to the desired shape, relief or look of the halves of the object to be produced. The figure halves (27) of one mould half (24) are uniform and correspond with the figure halves (27') of the second mould half (24'), and they are evenly distributed over the mould halves (24).

Preferably, the recesses (22) of the frame halves (21) will adopt a simple geometrical shape, for example circular, ellipsoidal, diamond-, ovoid, square, rectangular, etc. Again, the recesses (22) of each frame half (21) are evenly distributed over the surface of the frame halves (21) and the corresponding recesses (22) of each frame half (21) are identical and similar to each other.

There is also described a method for producing chocolate articles, wherein the chocolate articles are composed from two corresponding halves, a first half for the front side and a second half for the rear of the article, wherein the method makes use of the device described herein.

In one embodiment, the chocolate article is a filled object. In another embodiment, the chocolate article is a hollow object.

The method according to the invention is characterized in that the device, and in particular the figure half (27) of one of the mould halves (24) of the mould, is at least partly filled with chocolate melted into liquid state and/or other confectionery-material. In a preferred embodiment, the base layer of the article is obtained by rotational moulding (also called oscillating), indicating a method about a device comprising a closed figure half which is filled partially with chocolate, wherein the device is tilted in different directions in a centrifuge, so that the melted chocolate that is taken up in the figure half is thrown against the shell of the mould, where it cools. The device is oscillated in a known manner for a suitable time, wherein subsequently the mould is cooled at room temperature under air-ventilation, and wherein after opening of the mould at least one shaped article is removed from the mould, consisting of two halves which provide the front and rear side of the object.

The degree of filling of the figure half can easily be set by a skilled person, depending on the desired ultimate shell-thickness of the object to be manufactured, and taking into account the properties of the material to be cast. Usually, a filling degree of about 5-50 volume-percent in relation to the volume of the figure half will yield good results. Preferably, a degree of filling of 15-35 volume-percent is used. The method and device can be used for the manufacture of hollow articles of any conceivable and mouldable confectionery material. Thus, it is for instance possible to manufacture articles of confectionery. Preferably however, the device and method are used for the manufacture of hollow articles of chocolate. Chocolate material comprises a large number of components. The main ingredients are, for example, cocoa powder, cocoa butter, lecithin as a clotting agent, vanillin, sugar and milk powders. In order to give the chocolate colours that differ from the characteristic colours of chocolate, such as for example, red, green, orange,.. colouring agents, both natural and synthetic, may be added to the chocolate. It is also possible to add to the chocolate compound other fats permitted by law, such as coco line. Such viscosity-reducing agents are used to regulate the melt viscosity of the chocolate with respect to the melt viscosity suitable for the manufacturing process. The melt viscosity can be measured by the skilled person in a known manner, for instance by means of an MR (Melt Flow Index). Usually the quality of the chocolate, and hence also of the chocolate article, depends on the composition of the chocolate. The quality of the chocolate increases as the content of cocoa butter in the composition is higher. The higher the content of cocoa butter, the lower the melt viscosity of the chocolate composition. Preferably, the method according to the invention is characterized in that a chocolate composition is used with a high content of cocoa butter. Under high content is meant a content that has 5-40 weight-percent cocoa butter in relation to the total weight of the chocolate composition.

In one of the embodiments, the figure half can be filled with one single kind of chocolate or confectionery-material, so that the halves of the article consist of a uniform layer of material, after the production of the article. In a preferred embodiment however, the figure half will be (partly) filled/decorated with several layers of chocolate or confectionery-material, so as ultimately to obtain a chocolate object that consists of several sub-layers on top of a base layer of chocolate. These sub-layers may consist, among others, of different materials, different chocolate or of chocolate compositions that have a colour that is different from the base layer. More specifically, these sub-layers can preferentially be applied in specific parts or sections of the figure half that are responsible for the design and aesthetics of the hollow figure. In the example wherein the obtained object represents a person or an animal, these can be the eyes, nose or snout of the object, for instance. Thus, a relatively complex article can be achieved with high-finish detail.

In a preferred embodiment of the method, the first frame half (21), being disconnected from the second frame half (21'), will be subjected to a chocolate-filling process. Here will be provided, in the first instance, mainly the chocolate for the detail-finish of the first half that is suitable for the front of the chocolate article, after which the final base layer for the object is provided, when each added layer has cooled off.

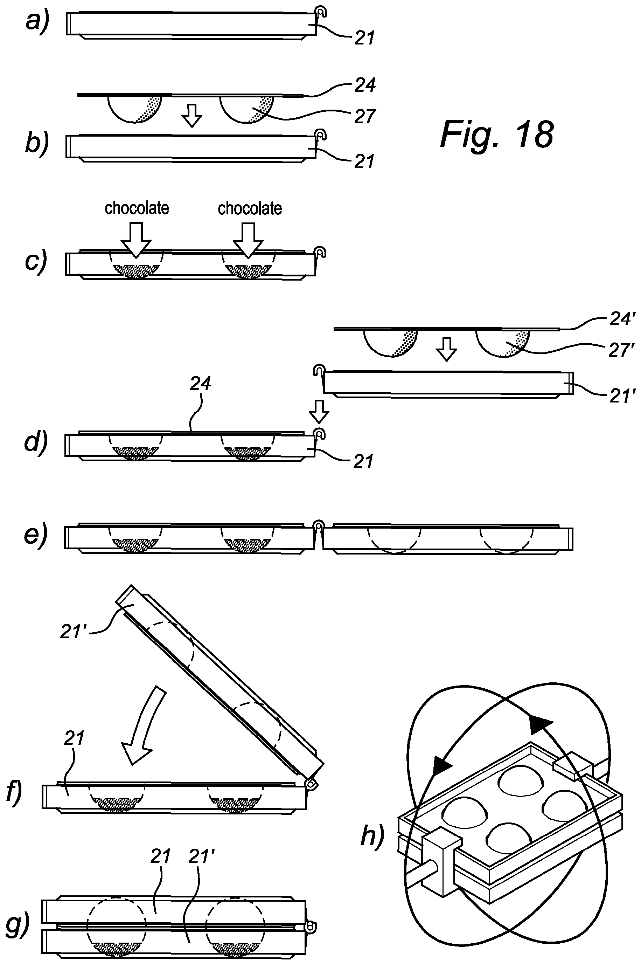

Figure 18 shows a schematic representation of a preferred embodiment of the method according to the present method. In a preferred embodiment, the method comprises the steps wherein initially the first frame half (21) of a mould half (24) is provided (Fig. 18a and b), after which the figure half (27) of the first mould half is provided with a base layer of chocolate (Figure 18c), after which finally the second frame half (21') is coupled to the first frame half (21) (Figure 18d). Coupling is done by means of the detachable hinge according to the present invention, so that the frame halves (21, 21') are detachedly articulated. This allows the frame halves to be coupled and uncoupled at the time when this is desired during production. After coupling of the frame halves (21, 21'), the frame halves (21, 21') are closed (Figure 18f and g, Figure 12c) and the device is oscillated in a centrifuge. In another preferred embodiment, the method further comprises an intermediate step wherein the chocolate layers of the detail-finish are cooled, each time after it has been applied in the figure half. During this cooling process, the melted chocolate will solidify, making it possible to apply a next a layer of chocolate in the figure half (27). Whenever there is a new layer of material applied under the shape of melted chocolate in the figure half (27) or in the sections of the figure half (27), these will be re-cooled. These (sub-)layers will be responsible for the detail-finish of the target object.

When this detail-finish is completed, a final chocolate base layer needs to be added to the figure half (27). This base layer of the chocolate article in a preferred embodiment is obtained by rotational moulding or oscillation. For this purpose, the frame halves (21, 21') have to be coupled with the mould halves (24, 24'), which so far have been treated independently of each other in the production process. To this end, use is made of the detachable hinge as described in the present invention. The frame halves are pivotally coupled, and then the melted chocolate is added which will serve as the final base layer of the desired hollow article. This chocolate layer is only added to the figure half of the mould half (24) of one frame half (21). By means of the hinge both frame halves will be perfectly positioned upon each other, wherein sufficient force is applied to retain both mould halves together so that they will not shift in relation to each other, nor that there will be leakage of chocolate.

In a preferred embodiment, the device is then placed in a rotational moulding machine or centrifuge (see figure 18h), wherein by more than one rotational oscillating motions the liquid chocolate is swung against the shell of the closed figure half. In general, these rotational moulding machines are provided with one or more rotating arms, powered for example by electricity, which arms are also able to rotate around their axis. At the end of an arm, a device can be applied by means of any suitable connection means, well known to the skilled person. Thus, it is for example possible to connect by means of screws an upright side of the device according to the invention to a flat plate provided on the arm, parallel to and/or perpendicular to the axis of the arm. Instead of screws, it is also possible to apply flat magnets to the arm plate and the side of the device, which together form a magnetic connection. Another option is to provide the arms with a kind of gripping device that can grip or clasp the sides of the device of the invention. Preferably, the connection between the arm and the device is easily detachable. In a typical whirl cycle, the device is rotated or oscillated during several cycles, such that the chocolate is well and homogeneously distributed over the figure half. One cycle consists for example of one rotation of the arm of the whirling machine through an angle of 360°, wherein at the same time the device is rotated about the axis that lies in the extension of the arm of the whirling machine, again through an angle of 360°.

After the rotational moulding, the chocolate is cooled off again in the device, and the figures obtained are removed from their moulds.

After the figures are removed from their moulds, the mould halves should be cleaned in order to remove all chocolate residues. After cleaning, the mould halves can be used again for the production of hollow chocolate articles. In one embodiment this can be done manually, for example by means of scrapers. However, this is a labour-intensive and time-consuming process, especially when the moulds contain a lot of positioning means (28). In a preferred embodiment of the present invention, the positioning means (28') on the mould halves (24) are redundant by making use a detachable hinge according to the present invention, since the hinge itself will provide sufficient support and strength to keep the frame halves perfectly positioned. This way the mould halves can be mechanically cleaned, which means better efficiency.

The device and method make it possible to manufacture chocolate articles on an industrial scale and in several numbers per run.

### DESCRIPTION OF THE FIGURES

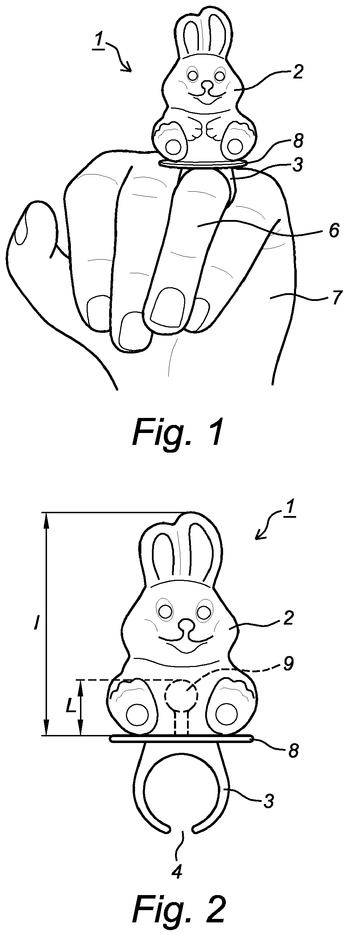

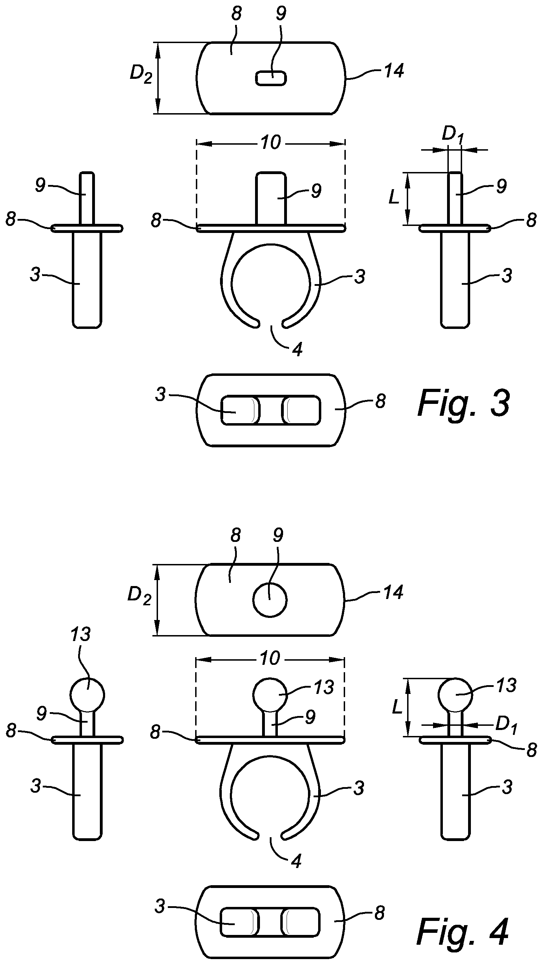

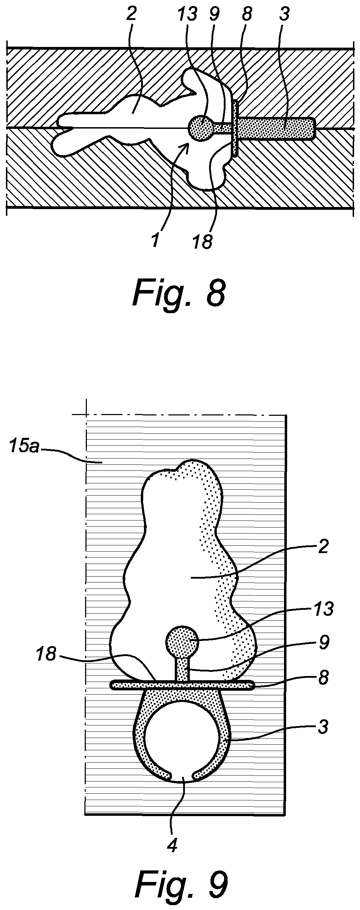

The invention relates to a carrier device (1) for a chocolate figure (2). In Figures 1-11, the chocolate figure is a three-dimensional rabbit or a clown.

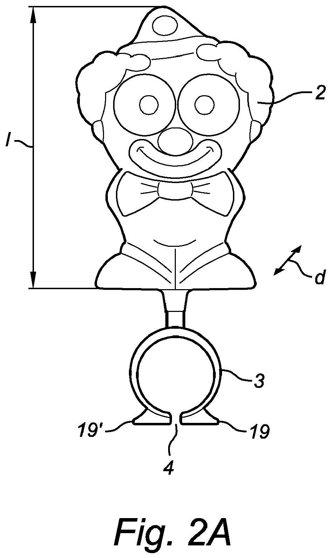

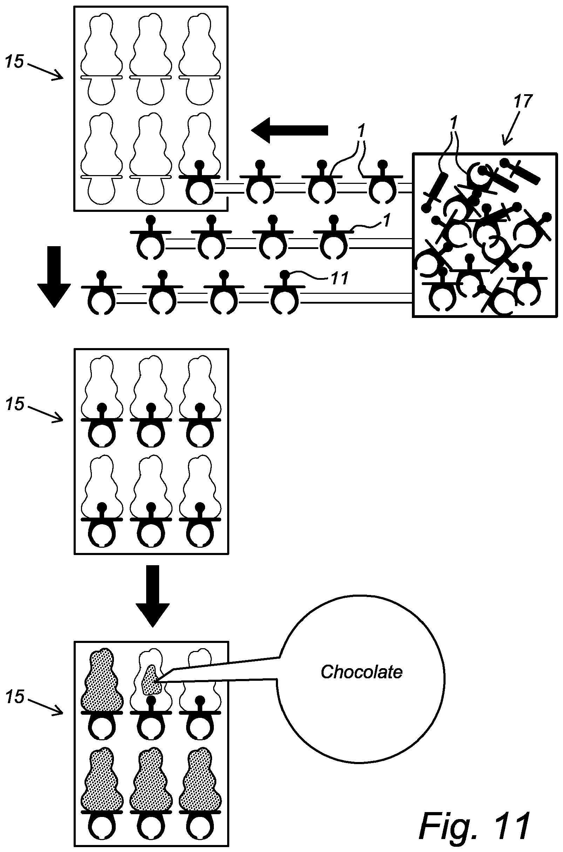

The carrier device and chocolate figure in Figure 2A is not according to the invention. In one embodiment, use is made of a filled chocolate figure, wherein "filled" should be regarded as "non-hollow". In another embodiment, use is made of a hollow chocolate figure. Such a three-dimensional chocolate figure (2) can be obtained from double mould 15, wherein each mould half (15a, 15b) is hollow. Chocolate figures according to the invention may also be flat on one side, usually this being the rear or backside of the figure. For example, it may be that the chocolate figure (2) only has a front side in a relief and a backside that is flat. The chocolate figures (2) according to the invention may also be provided with other decorative elements, such as different colours of chocolate. This can be achieved by applying in multiple layers the different colours of chocolate in the mould. In another embodiment, a mould 15 is used, consisting of only one part or one half, as shown in Figure 11. The obtained chocolate figure will here be flat on one side (usually the rear side), whereas the other side is provided with a relief.

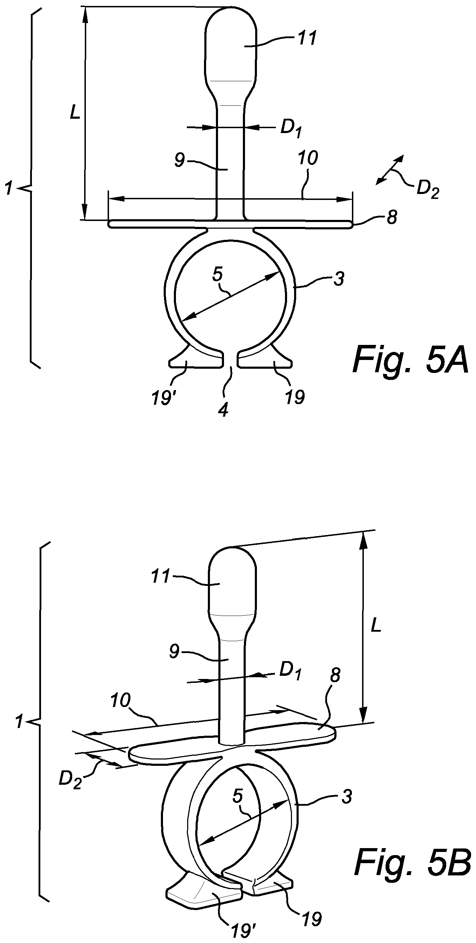

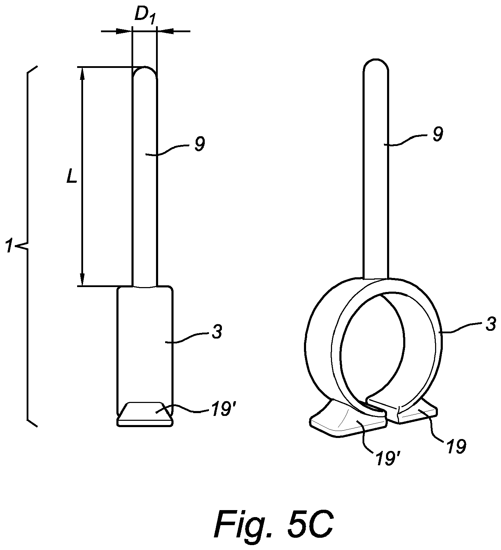

The carrier device (1) is provided with a partially open (4) or closed ring (3) in a suitable diameter to be easily worn around the ring finger of a hand (7). A partly open (4) ring structure is advantageous because hereby clamping is avoided. Preferably, the two legs of the ring are also partly elastic so that they can adjust somewhat to the thickness of finger. In one embodiment, as can be seen in Figure 5, the underside of the ring (3) is provided with one or more support feet (19, 19'). These support feet (19, 19') provide additional clamping while wearing and also ensure that the ring can stand on a horizontal surface.

In one embodiment, the carrier device (1) comprises a carrier platform (8) on top of the ring (3) for partially carrying of the base (12) or the underside of the chocolate figure (2). A fixing element (9) is provided to the carrier platform (8), around which the chocolate is poured into the mould (15). The fixing element (9) anchors the chocolate figure (2) onto the carrier device (1).

The fixing element (9) extends substantially perpendicular to the carrier platform (8). For an even better adhesion to the chocolate figure, a widening (11) is provided at the free end of the fixing element (9). The fixing element (9) preferably has a length that is smaller than the diameter of the ring and is provided with a spherical shape (13) at its free end (11), again in order to cause a pleasant mouth-feel.

In a preferred embodiment, the fixing element (9) is provided with an element of surprise - not shown in the Figures. This element of surprise is obviously not accessible or visible initially at the purchase. Surprise elements can include a piece of jewellery, toys, information (SMS, twitter or facebook data), a little figurine, etc.

The carrier platform (8) has a width that is 1.1 to 2.5 times the diameter of the ring (3). Tests have shown that this ratio is ergonomically advantageous and avoids leakage of melting chocolate while eating the chocolate figure (2). The carrier platform (8) preferably has no sharp edges, more preferably it is rounded off, and still more preferably it is ellipsoidal, round, or rectangular with rounded edges in order to avoid injuries to the lips. In a preferred embodiment, not shown, the carrier platform includes a raised peripheral edge, whereby the melted chocolate remains on the carrier platform (8).

The carrier device is preferably made of at least partially elastic material, such as a plastic material made of PP or PE, or a copolymer.

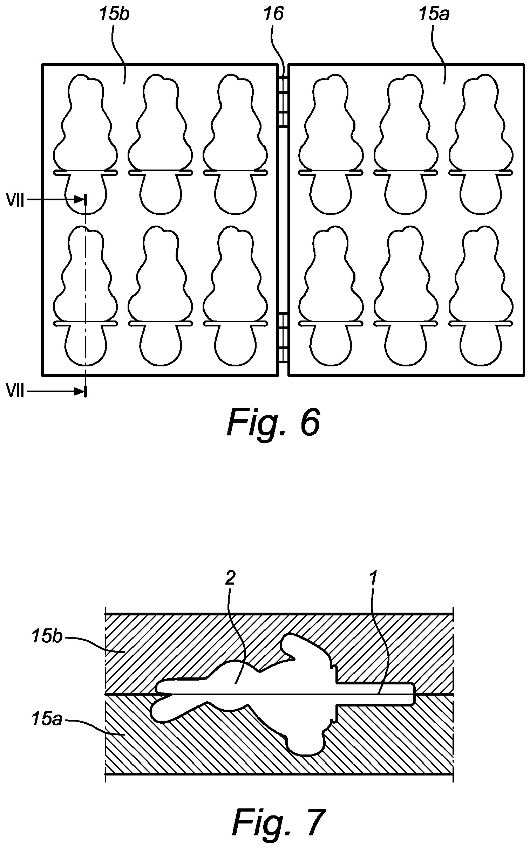

In the Figures 6-11, preferred embodiments of the method according to the invention are illustrated for the manufacture of chocolate figures (2) on carrier device (1) according to the invention. The chocolate figures may be formed in moulds (15) from a first (15a) and a second (15b) mould half. It is possible that only one of the mould halves (15a/15b) is hollow, and thus provides a figure, while the other mould half (15a or 15b) is flat and only closes the first mould half. In another embodiment, a mould (15) is used consisting of only one part or half of a mould (Figure 11).

In an embodiment the mould halves (15a, 15b) are provided with receses for receiving the carrier devices (1). The carrier platform (8) seals off each mould half chocolate-tight. This chocolate-tight sealing is required, as only chocolate should be provided on the top of the carrier platform (8). For this purpose, the carrier platform (8) is provided with a chocolate-tight peripheral edge in the mould. Melted chocolate can be applied in the mould (15) or mould half (15a, 15b) in or one or several layers, possibly in different colours. In one embodiment, the mould half (15a) of the mould (15) is first decorated. This decoration can consist of, for example, confectionery or coloured chocolate. The decorative effect is thus increased. It goes without saying that the ring (3) should be kept chocolate-free. The sealing in the mould by means of the peripheral edge of carrier platform (8) should be done accurately. Preferably moulds are used, which are provided with detachable hinges (16); detachable hinges are to be considered as being hinges that are divided into a pivot axis and hinge lugs and that are easy to (dis)assemble by means of a snap or pressure movement, in the context of the present invention.

Preferably, the surface of the base (18) of the chocolate figure is fully supported by the carrier platform (8) and there are no overhanging chocolate parts. An alternative embodiment of the mould and method for the manufacture of chocolate figures is shown in Figures 12-18.

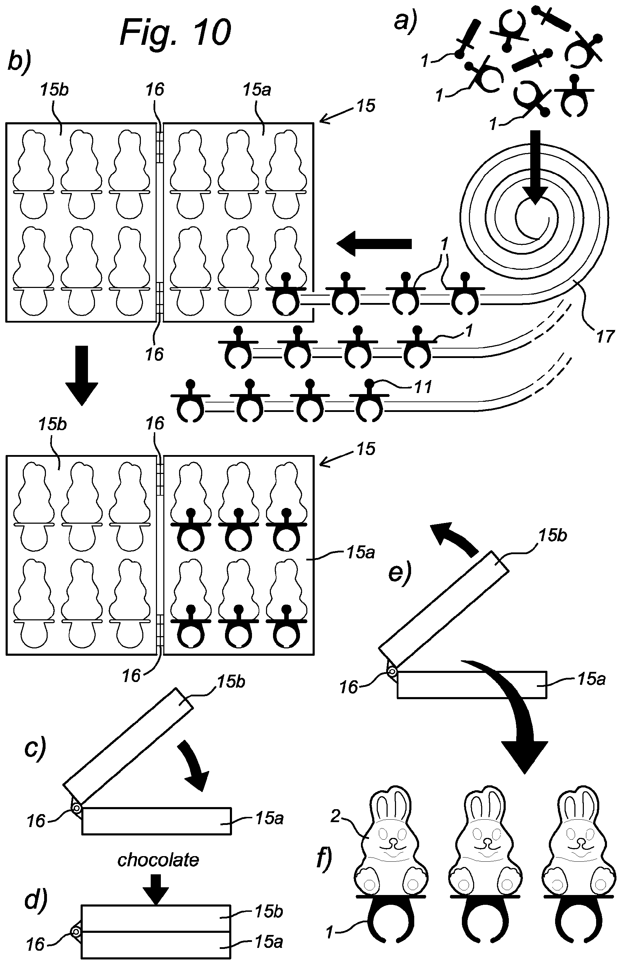

In Figure 10 the various process steps of the method according to the invention are schematically illustrated. Starting with a, first the carrier devices (1) should be put in an appropriate orientation by means of an orientation device (17), after which these can be supplied automatically to the mould half (15a). After the application of these carrier devices (1) into the mould half (15a) in b, the chocolate is added in melted state, wherein the other mould half (15b) is placed upon the first mould half (15a). After solidification, the carrier devices (1) with figures (2) are taken out of their moulds.

Figure 11 shows another embodiment of a method according to the present invention, wherein the carrier devices (1) are supplied in the right orientation to a chocolate mould (15) by way of vibrating troughs (17). Decoration of the mould can take place before or after the supply of the carrier devices. Preferably, the decoration takes place before the carrier devices are positioned in the mould. Subsequently, the chocolate figures are completed by the addition of melted chocolate into the recesses, which for that purpose are provided within the mould (15).

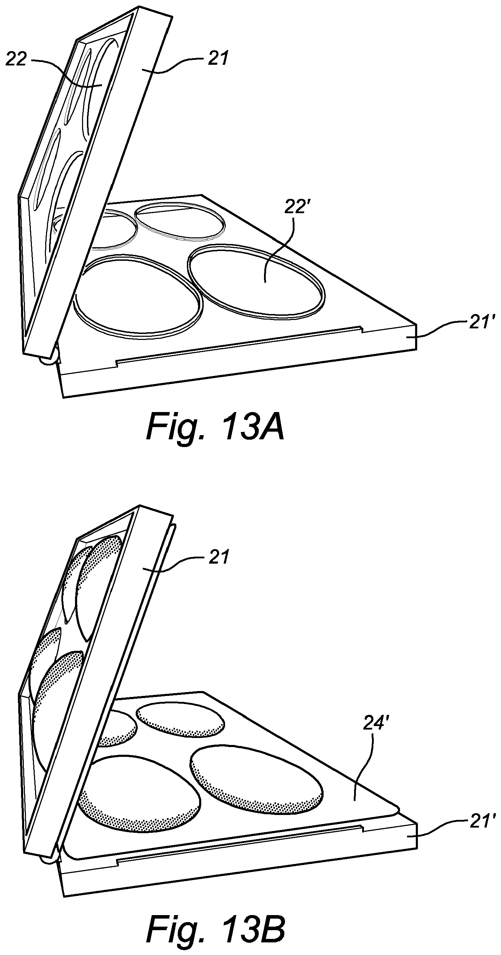

With respect to Figure 12, an embodiment is shown of a possible frame (20), useful for the production of the chocolate figures wherein the recesses of the frame halves (21, 21') of the frame (20) are rectangular. The mould halves (24) of the mould (23) are shaped in such a way that they fit into the recesses (22, 22') of the frame halves. The number of recesses (22, 22') of one frame half (21, 21') will determine the total number of hollow articles that can be created per mould. Each recess (22, 22') will comprise a corresponding figure half when the mould halves (24, 24') are present in the frame. Figures 13-15 show another embodiment according to the present invention, wherein the recesses (22, 22') are ovoid. Although these devices are preferentially used for the production of ovoid hollow articles like Easter eggs, such devices are not limited thereto, as it is the figure half that will determine the ultimate intended shape of the hollow article.

Figures 16 and 17 illustrate a detailed preferred embodiment of the detachable hinge with hinge lugs (26, 26') and pivot axis (25). The first frame half (21) comprises the pivot axis (25), wherein the hinge lugs (26) fixedly clasp said axis (25). Figure 16a depicts the situation wherein the two frame halves (21, 21') are disconnected from each other. Figure 16b however depicts the situation wherein the frame halves (21, 21') of the device are coupled by means of a detachable hinge according to a preferred embodiment of the present invention. Here the hinge lugs (26) of the second frame half (21') will detachably clasp the pivot axis (25) by means of a simple upward snap- or press movement. Figure 17a and b show in more detail the manner in which the two frame halves (21, 21') can be detachedly pivotally connected by means of a preferred embodiment of the present invention. Figure 16c and 17c depict the closed confirmation of the frame halves (21, 21'), wherein the frame halves (21, 21') acquire the closed, folded confirmation by means of a detachable hinge.

The invention is advantageous in production and consumption. Thus spilling (and accordingly loss) is avoided during the consumption of a chocolate figure on a carrier device according to the invention. For this purpose the attachment of the carrier device to the figure should be retained as long as possible, allowing the user to keep sucking rather than biting the chocolate.

It is evident that the invention is doing all in its power, on the one hand, to provide a production process as simple as possible and, on the other hand, to provide ergonomically pleasing chocolate products.

### Reference in the figures:

- 1.: carrier device
- 2.: chocolate figure
- 3.: ring
- 4.: ring opening
- 5.: ring diameter
- 6.: a finger
- 7.: hand
- 8.: carrier platform
- 9.: fixing element
- 10.: the width of the carrier platform,
- 11.: widening at free end of the fixing element
- 12.: base of the figure
- 13.: spherical end
- 14.: upright leak edge
- 15.: mould - chocolate mould half 15a and 15b
- 16.: detachable hinge
- 17.: orientation device
- 18.: base of chocolate figure
- 19.: foot supports
- 20.: frame
- 21.: frame halves
- 22.: recess
- 23.: mould
- 24.: mould halves
- 25.: pivot axis
- 26: hinge lugs
- 27.: mould shape/figure half
- 28.: positioning element

## Claims

1. Carrier device (1) provided with a chocolate figure (2), comprising :
a partially open or closed ring (3) having a ring diameter (5) suitable for surrounding at least partially a finger (6) of a hand (7), and
a fixing element (9) provided on the ring (3), which fixing element (9) is suitable for the attachment of a chocolate figure (2), wherein the fixing element (9) extends away from the ring (3) and is at least partly surrounded by the chocolate figure (2), **characterized in that** the ratio between the length of the chocolate figure and the length of the fixing element is between 1.5 and 4, and **in that** the carrier device (1) comprises a carrier platform (8), which extends substantially perpendicularly to the longitudinal direction of the fixing element (9) that is provided between the ring (3) and fixing element (9) and wherein the chocolate figure rests on said carrier platform.

2. Carrier device (1) according to claim 1, **characterized in that** the ratio between the length of the chocolate figure and the fixing element is between 1.5 and 3, most preferably between 1.5 and 2.

3. Carrier device (1) according to any one of the preceding claims, **characterized in that** the fixing element (9) is provided with a widening (11) at its free end, contained in the chocolate figure (2).

4. Carrier device (1) according to any one of the preceding claims, **characterized in that** the average width over the entire length of the fixing element (9) is smaller than the average thickness over the entire length of the chocolate figure (2).

5. Carrier device (1) according to claim 4, **characterized in that** the average width (D1) over the entire length of the fixing element (9) is maximally 0.9 times the average thickness over the entire length of the chocolate figure (2).

6. Carrier device (1) according to any of the preceding claims , **characterized in that** the carrier platform (8) has a length that is greater than the opening (5) of the ring (3), preferably the length of the carrier platform is 1.1 to 2.5 times the opening (5) of the ring (3).

7. Carrier device (1) according to any one of the preceding claims, **characterized in that** the width (D2) of the carrier platform (8) is 0.5 to 1.5 times the width (d2) of the chocolate figure (2).

8. Carrier device (1) according to any one of the preceding claims, **characterized in that** the ring (3) is at least partly open.

9. Carrier device (1) according to any one of the preceding claims, **characterized in that** the ring (3) is provided on its base with one or more foot supports (19, 19').

10. Carrier device (1) according to any one of the preceding claims, **characterized in that** the ring (3) is made from an at least partially elastic material.

11. Carrier device (1) according to any one of the preceding claims, **characterized in that** the fixing element (9) extends substantially perpendicular to the carrier platform (8) or the ring (3).

12. Carrier device (1) according to any one of the preceding claims, **characterized in that** the fixing element (9) has a length that is smaller than the opening of the ring (3).

13. Method for the manufacture of a carrier device (1) provided with a chocolate figure (2) according to any one of the preceding claims 1-12, including:
- optionally, the decoration of one or more chocolate moulds (15);
- providing a melted chocolate product in one or more layers; and
- delivering the carrier device in the appropriate orientation to a chocolate mould(half) (15) by means of an orientation device (17).

## Patentansprüche

1. Mit einer Schokoladenfigur (2) versehene Trägervorrichtung (1), umfassend:
einen teilweise offenen oder geschlossenen Ring (3) mit einem Ringdurchmesser (5), der dazu geeignet ist, zumindest teilweise einen Finger (6) einer Hand (7) zu umgeben, und
ein am Ring (3) vorgesehenes Befestigungselement (9), welches Befestigungselement (9) zur Anbringung einer Schokoladenfigur (2) geeignet ist, wobei sich das Befestigungselement (9) vom Ring (3) weg erstreckt und zumindest teilweise von der Schokoladenfigur (2) umgeben ist, **dadurch gekennzeichnet, dass** das Verhältnis zwischen der Länge der Schokoladenfigur und der Länge des Fixierelements zwischen 1,5 und 4 liegt, und dass die Trägervorrichtung (1) eine Trägerplattform (8) umfasst, die sich im Wesentlichen senkrecht zur Längsrichtung des Befestigungselement (9) erstreckt, das zwischen dem Ring (3) und Befestigungselement (9) vorgesehen ist und wobei die Schokoladenfigur ruht auf der Trägerplattform.

2. Trägervorrichtung (1) nach Anspruch 1, **dadurch gekennzeichnet, dass** das Verhältnis zwischen der Länge der Schokoladenfigur und dem Befestigungselement zwischen 1,5 und 3, besonders bevorzugt zwischen 1,5 und 2 liegt.

3. Trägervorrichtung (1) nach einem der vorhergehenden Ansprüche, **dadurch gekennzeichnet, dass** das Befestigungselement (9) an seinem in der Schokoladenfigur (2) enthaltenen freien Ende mit einer Aufweitung (11) versehen ist.

4. Trägervorrichtung (1) nach einem der vorhergehenden Ansprüche, **dadurch gekennzeichnet, dass** die durchschnittliche Breite über die gesamte Länge des Befestigungselement (9) geringer ist als die durchschnittliche Dicke über die gesamte Länge der Schokoladenfigur (2).

5. Trägervorrichtung (1) nach Anspruch 4, **dadurch gekennzeichnet, dass** die durchschnittliche Breite (D1) über die gesamte Länge des Befestigungselement (9) maximal das 0,9-fache der durchschnittlichen Dicke über die gesamte Länge der Schokoladenfigur (2) beträgt.

6. Trägervorrichtung (1) nach einem der vorhergehenden Ansprüche, **dadurch gekennzeichnet, dass** die Trägerplattform (8) eine Länge aufweist, die größer ist als die Öffnung (5) des Rings (3), vorzugsweise die Länge der Trägerplattform das 1,1- bis 2,5-fache der Öffnung (5) des Rings (3) beträgt.

7. Trägervorrichtung (1) nach einem der vorhergehenden Ansprüche, **dadurch gekennzeichnet, dass** die Breite (D2) der Trägerplattform (8) das 0,5- bis 1,5-fache der Breite (d2) der Schokoladenfigur (2) beträgt.

8. Trägervorrichtung (1) nach einem der vorhergehenden Ansprüche, **dadurch gekennzeichnet, dass** der Ring (3) zumindest teilweise offen ist.

9. Trägervorrichtung (1) nach einem der vorhergehenden Ansprüche, **dadurch gekennzeichnet, dass** der Ring (3) an seiner Basis mit einer oder mehreren Fußstützen (19, 19') versehen ist.

10. Trägervorrichtung (1) nach einem der vorhergehenden Ansprüche, **dadurch gekennzeichnet, dass** der Ring (3) aus einem zumindest teilweise elastischen Material besteht.

11. Trägervorrichtung (1) nach einem der vorhergehenden Ansprüche, **dadurch gekennzeichnet, dass** sich das Befestigungselement (9) im Wesentlichen senkrecht zur Trägerplattform (8) oder zum Ring (3) erstreckt.

12. Trägervorrichtung (1) nach einem der vorhergehenden Ansprüche, **dadurch gekennzeichnet, dass** das Befestigungselement (9) eine Länge aufweist, die geringer ist als die Öffnung des Rings (3).

13. Verfahren zur Herstellung einer mit einer Schokoladenfigur (2) versehenen Trägervorrichtung (1) nach einem der vorhergehenden Ansprüche 1-12, enthaltend:
- gegebenenfalls, die Dekoration einer oder mehrerer Schokoladenformen (15);
- Bereitstellung eines geschmolzenen Schokoladenprodukts in einer oder mehreren Schichten; und
- Lieferung der Trägervorrichtung in der richtigen Ausrichtung zu einer Schokoladenform(Hälfte) (15) mittels einer Orientierungsvorrichtung (17).

## Revendications

1. Dispositif de support (1) muni d'une figurine en chocolat (2), comprenant:
une bague (3) partiellement ouverte ou fermée ayant un diamètre de bague (5) apte à entourer au moins partiellement un doigt (6) d'une main (7), et
un élément de fixation (9) prévu sur la bague (3), lequel élément de fixation (9) est adapté pour la fixation d'une figurine en chocolat (2), dans lequel l'élément de fixation (9) s'étend en s'éloignant de la bague (3) et est au moins en partie entouré par la figurine en chocolat (2), **caractérisé en ce que** le rapport entre la longueur de la figurine en chocolat et la longueur de l'élément de fixation est compris entre 1,5 et 4, et **en ce que** le dispositif de support (1) comprend une plate-forme de support (8) qui s'étend sensiblement perpendiculairement à la direction longitudinale de l'élément de fixation (9) qui est prévue entre la bague (3) et l'élément de fixation (9) et dans laquelle la figurine en chocolat repose sur ladite plate-forme de support.

2. Dispositif de support (1) selon la revendication 1, **caractérisé en ce que** le rapport entre la longueur de la figurine en chocolat et l'élément de fixation est compris entre 1,5 et 3, de manière préférée entre 1,5 et 2.

3. Dispositif de support (1) selon l'une quelconque des revendications précédentes, **caractérisé en ce que** l'élément de fixation (9) est muni d'un élargissement (11) à son extrémité libre, contenu dans la figurine en chocolat (2).

4. Dispositif de support (1) selon l'une quelconque des revendications précédentes, **caractérisé en ce que** la largeur moyenne sur toute la longueur de l'élément de fixation (9) est inférieure à l'épaisseur moyenne sur toute la longueur de la figurine en chocolat (2).

5. Dispositif de support (1) selon la revendication 4, **caractérisé en ce que** la largeur moyenne (D1) sur toute la longueur de l'élément de fixation (9) est au maximum 0,9 fois l'épaisseur moyenne sur toute la longueur de la figurine en chocolat (2).

6. Dispositif de support (1) selon l'une quelconque des revendications précédentes, **caractérisé en ce que** la plate-forme de support (8) a une longueur qui est supérieure à l'ouverture (5) de la bague (3), de préférence la longueur de la plate-forme de support est de 1,1 à 2,5 fois l'ouverture (5) de la bague (3).

7. Dispositif de support (1) selon l'une quelconque des revendications précédentes, **caractérisé en ce que** la largeur (D2) de la plate-forme de support (8) est 0,5 à 1,5 fois la largeur (d2) de la figurine en chocolat (2).

8. Dispositif de support (1) selon l'une quelconque des revendications précédentes, **caractérisé en ce que** la bague (3) est au moins partiellement ouverte.

9. Dispositif de support (1) selon l'une quelconque des revendications précédentes, **caractérisé en ce que** la bague (3) est munie sur sa base d'un ou plusieurs supports de pied (19, 19').

10. Dispositif de support (1) selon l'une quelconque des revendications précédentes, **caractérisé en ce que** la bague (3) est réalisée en un matériau au moins partiellement élastique.

11. Dispositif de support (1) selon l'une quelconque des revendications précédentes, **caractérisé en ce que** l'élément de fixation (9) s'étend sensiblement perpendiculairement à la plateforme de support (8) ou à la bague (3).

12. Dispositif de support (1) selon l'une quelconque des revendications précédentes, **caractérisé en ce que** l'élément de fixation (9) a une longueur inférieure à l'ouverture de la bague (3).

13. Procédé de fabrication d'un dispositif de support (1) muni d'une figurine en chocolat (2) selon l'une quelconque des revendications précédentes 1-12, comprenant:
- éventuellement, la décoration d'un ou plusieurs moules à chocolat (15);
- fournir un produit de chocolat fondu en une ou plusieurs couches; et
- délivrer le dispositif de support dans l'orientation appropriée à un (demi) moule à chocolat (15) au moyen d'un dispositif d'orientation (17).
